(19) Europäisches Patentamt

European Patent Office

Office européen des brevets

(11) Numéro de publication : **0 296 958 B1**

(12) **FASCICULE DE BREVET EUROPEEN**

(45) Date de publication du fascicule du brevet :
22.04.92 Bulletin 92/17

(21) Numéro de dépôt : **88401541.3**

(22) Date de dépôt : **21.06.88**

(51) Int. Cl.⁵ : **G05B 9/02,** G05D 16/20, F16H 57/00

(54) **Dispositif de pilotage d'une commande électro-hydraulique de pression.**

(30) Priorité : **22.06.87 FR 8708746**

(43) Date de publication de la demande :
**28.12.88 Bulletin 88/52**

(45) Mention de la délivrance du brevet :
**22.04.92 Bulletin 92/17**

(84) Etats contractants désignés :
**BE DE ES GB IT NL SE**

(56) Documents cités :
**FR-A- 2 455 310**
**FR-A- 2 494 007**

(56) Documents cités :
**PATENTS ABSTRACTS OF JAPAN, vol. 6, no. 18 (P-100)[896], 2 février 1982, page 60 P 100; & JP-A-140 419 (HITACHI SEISAKUSHO K.K.) 02-11-1981**
**PATENT ABSTRACTS OF JAPAN, vol. 11, no. 37 (P-543)[2484], 4 février 1987, page 4 P 543; & JP-A-61 206 001 (MATSUSHITA ELECTRIC IND. CO., LTD) 12-09-1986**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Carre, Jean-Claude**
**11, Avenue de la Redoute**
**F-92600 Asnières (FR)**

(74) Mandataire : **Ernst-Schonberg, Michel et al**
**REGIE NATIONALE DES USINES RENAULT (S. 0267) 8 & 10, avenue Emile Zola**
**F-92109 Boulogne Billancourt Cédex (FR)**

# Description

La présente invention se rapporte à un dispositif de pilotage d'une grandeur variable notamment pour une commande électro-hydraulique de pression d'une transmission automatique de véhicule automobile.

Certains systèmes de pilotage comportent des sécurités, destinées à assurer une commande de processus très précise. C'est notamment le cas du système faisant l'objet de la publication FR 2.555.310, capable de travailler lors d'une déconnexion de la boucle de réaction. Par ailleurs, le montage, décrit dans la publication FR-2.494.007 est équipé d'un système de détection de perturbation agissant sur un inverseur de commande.

En vue de réaliser une commande électrohydraulique de pression d'une très grande fiabilité, l'invention propose la mise en oeuvre d'un dispositif de pilotage ayant un fonctionnement comparable en boucle ouverte et en boucle fermée. La suppression de non fonctionnement de l'élément de mesure ainsi obtenue évite la dérive de la grandeur pilotée vers une des valeurs butée de la commande, mettant hors service le système.

Le but de la présente invention est de pallier cet inconvénient en permettant un fonctionnement comparable en boucle fermée et en boucle ouverte.

La figure 1 rapporte l'organigramme d'un système d'asservissement classique avec correcteur proportionnel intégral et dérivé (PID).

La figure 2 représente l'organigramme du système d'asservissement avec tableau auto-adaptif.

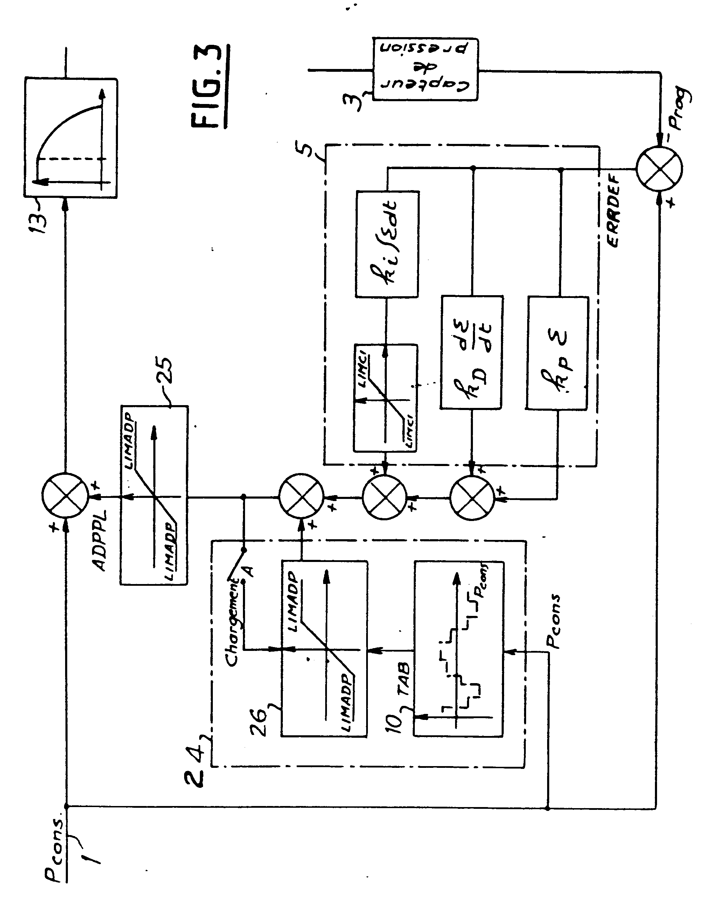

La figure 3 reproduit un organigramme détaillé du système d'asservissement avec tableau auto-adaptatif, limitations et sécurités.

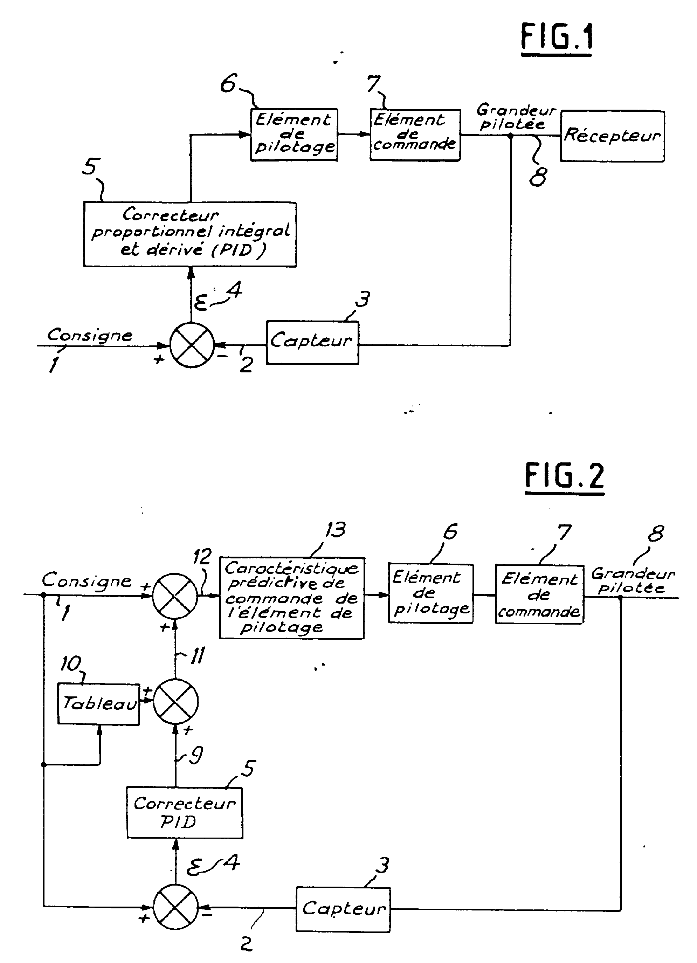

Dans les systèmes d'asservissement classiques (figure 1) la grandeur de consigne 1 est comparée à la grandeur de mesure 2, délivrée par un capteur 3. L'erreur 4 entre ces deux grandeurs est ensuite traitée par un régulateur proportionnel, intégral et dérivé 5 (PID). Le signal résultant commande un élément de pilotage 6, par exemple une servovalve, lui-même pilotant un élément de commande 7, par exemple une valve de limitation de pression. La grandeur 8 pilotée par cet élément de commande est l'image de la grandeur de consigne 1.

Si le capteur est en panne on n'a pas de moyen de pilotage de la grandeur 8. Pour pallier cette possibilité de défaillance, on a modifié le pilotage, comme cela est indiqué sur la figure 2. Le signal résultant 9 du régulateur proportionnel intégral et dérivé 5 est additionné à une valeur lue dans le tableau 10 fonction de la consigne 1. Le chargement de ce tableau par le signal 9 se réalise à l'adresse fonction de la consigne 1, et s'effectue continûment lors des phases stabilisées de fonctionnement de la grandeur pilotée 8.

Cette stabilisation de la grandeur 8 peut se détecter en s'assurant que la grandeur $\varepsilon$ 4 est restée comprise entre deux valeur fixées ($\pm \alpha$), pendant au moins un temps donné (t). Les valeurs de $\alpha$ et t sont à définir en fonction du système. La grandeur 9 élaborée par le régulateur est égale à $K p \varepsilon + + K_D \frac{d\varepsilon}{dt} + K_i \int \varepsilon \, dt$. Lors des phases stabilisées, il ne reste que $K_i \int \varepsilon \, dt$ ; cette quantité est annulée après avoir été sommée avec la quantité qui se trouvait précédemment dans le tableau pour la consigne correspondante. Le résultat 11 de la somme du signal 9 avec le contenu du tableau 10 est lui-même additionné à la consigne 1. Le résultat 12 de cette sommation permet, au moyen d'un convertisseur soit par le calcul d'une fonction mathématique, soit par la recherche dans un tableau, de définir la grandeur de commande de l'élément de pilotage 6. Cette configuration permet, en cas d'ouverture de la boucle d'asservissement par une rupture du capteur ou de ses éléments de liaison, en annulant l'information 5, de continuer à assurer un fonctionnement comparable à celui que l'on avait en boucle fermée, pour une durée limitée permettant de rejoindre un centre de réparation. Ce système permet de compenser les dérives lentes, à la fois en boucle fermée et en boucle ouverte, et d'avoir des caractéristiques de fonctionnement identiques dans les deux cas, après un certain temps d'apprentissage.

L'erreur entre la consigne de pression de ligne et la valeur de pression effectivement lue par le capteur est traitée par un correcteur PID classique dont les coefficients de faible valeur pour la correction proportionnelle assurent de bonne précision grâce à la correction intégrale dans les plages de fonctionnement en régime stabilisée. La précision lors des changements de consigne est assurée par une correction supplémentaire générée par une mémorisation, dans un tableau dit "tableau d'autoadaptivité", des erreurs en régime stabilisé.

Dans le programme de régulation, on a créé un tableau particulier, adressable par la consigne de pression : son chargement s'effectue continûment pendant les phases stabilisées de la pression de ligne avec la correction qu'il a fallu effectuer pour que la pression de ligne corresponde à la pression de consigne.

Ainsi, lors des phases transitoires, la pression de modulation qui pilote l'élément de commande 7 est déjà corrigée de la valeur qui a été précédemment chargée dans le tableau 10 pour cette valeur de consigne lors des phases antérieures en régime stabilisé.

L'élément de pilotage 6 est une valve battante rapide, normalement ouverte, pilotée en courant par des signaux électriques issus de calculateurs.

Cette commande se fait à fréquence fixe (100 Hz) par des signaux de type appel/maintien (3,3 A, 1,7 A) hachés à une fréquence de 7 kHz pour diminuer la puissance dissipée par les transistors de pilotage.

Le débit pulsé par cette électro-vanne ou élément de pilotage 6 et intégré par l'élément de commande 7 génère une pression PM évoluant entre 0,5 b et 3 b en fonction du rapport cyclique

L'élément de commande 7 est une vanne de limitation de pression qui permet de dériver à la bâche le débit excédentaire fourni par la pompe, pour assurer la pression de ligne désirée. Pour diminuer les oscillations de pression provoquées par l'électrovanne de modulation (EVM) fonctionnant à 100 Hz la vanne est amortie par un gicleur.

Tableau auto-adaptatif 10

Si l'erreur ε reste comprise entre 2 valeurs "± Alpha" pendant un temps de "n" tours de boucle du programme général, on charge cette valeur dans le tableau 10 à l'adresse de la consigne 1 de pression.

"ALPHA" et "n" doivent être choisis pour que le tableau se remplisse rapidement mais uniquement avec des valeurs stables.

L'élément 26 : Les valeurs de correction susceptibles d'être chargées dans le tableau sont limitées à ± "LIMADP". Les valeurs chargées dans le tableau sont utilisées pour la correction aussi bien en boucle ouverte qu'en boucle fermée.

L'élément 25 : La valeur de la correction totale est limitée à ± "LIMADP".

## SURVEILLANCE DE LA BOUCLE DE PRESSION

### Surveillance statique du capteur de pression 3

On vérifie que la tension délivrée par le capteur de pression est supérieure à 2,5 % de sa tension d'alimentaion.

### Surveillance de l'ensemble électro-hydraulique 6 et 7 hors régulation

Pour un rapport cyclique de 100 %, on vérifie que la pression de ligne lue par le capteur de pression est inférieure à 6 bars. (Elle doit normalement se trouver à une valeur inférieure).

Pour un rapport cyclique de 0 %, on vérifie que la pression de ligne est supérieure à 7 bars. (Elle doit normalement se trouver à une valeur supérieure).

## SURVEILLANCE DYNAMIQUE DE LA REGULATION

### Surveillance des transitoires

Elle se fait au niveau de l'élaboration de l'erreur ε. Si cette erreur ε, au moment du test, est supérieure à une valeur "ERRDEF", on enregistre une erreur.

### Surveillance des dérives lentes

Si le cumul de la correction donnée par le tableau et de l'erreur après traitement par le PID est supérieur à une valeur limite "LIMADP", on enregistre une erreur.

### Remarques :

1°) Le cumul du nombre des erreurs, sans interruption jusqu'à une valeur donnée comme limite "CDFPL", provoque un défaut.
2°) Tout test n'enregistrant pas une erreur réinitialise le compteur.

## SURVEILLANCE DE L'EVM 6

Lorsque l'on a comptabilisé un nombre d'erreurs correspondant à "CDFPL", un test permet de contrôler le circuit électrique de l'EVM. Si l'on est hors changement de rapport, on lance trois commandes successives d'EVM à 40 % pendant lesquelles on vérifie que le temps de montée du courant d'appel se situe entre 2 valeurs.

Si l'on détecte alors un défaut, on mémorise, défaut "EVM" et l'on passe en rapport de sauvegarde de boîte de vitesses, sinon on mémorise un défaut "PL" et on passe également en rapport de sauvegarde

## Revendications

1. Dispositif de pilotage d'une grandeur variable (8), notamment d'une pression utilisée dans une commande électrohydraulique d'une boîte de vitesses automatique, comportant un élement de pilotage (6) associe à un élement de commande (7) qui génère la grandeur variable (8), ladite grandeur variable (8) étant traitée par un capteur (3) pour donner une grandeur de mesure (2), un comparateur pour comparer ladite grandeur de mesure (2) à une grandeur de consigne (1) et dont la sortie (erreur ε ) est traitée par un régulateur (5) du type proportionnel, intégral et dérivé ayant un signal de sortie (9) qui agit sur l'élement de pilotage (6), caractérisé en ce que ledit dispositif de pilotage est muni en outre :

– d'un tableau auto-adaptatif de correction (10) recevant ladite grandeur de consigne (1) et délivrant une valeur de correction correspondante à ladite grandeur de consigne,
– d'un premier additionneur recevant ladite valeur de correction et le signal de sortie (9) dudit régulateur et fournissant un signal de sortie (11),
– d'un deuxième additionneur recevant le signal de sortie du premier additionneur et la grandeur de consigne et délivrant un signal de commande (12) à un convertisseur (13) pour l'élement de pilotage (6),

chargement dudit tableau (10) s'effectuant continûment pendant les phases stabilisées de fonctionnement de la grandeur variable (8) avec une valeur de la correction qu'il a falllu effectuer pour que la grandeur variable (8) corresponde à la grandeur de consigne (1), de manière que le dispositif ait un fonctionnement comparable en boucle fermée et en boucle ouverte après une periode d'auto-apprentissage.

2. Dispositif selon la revendication 1 caracterisé en ce qu'il comporte un détecteur (25) connecté entre lesdits additionneurs pour surveiller le signal de sortie dudit premier additionneur de manière à détecter les anomalies de fonctionnement.

## Patentansprüche

1. Einrichtung zur Regelung einer variablen Größe (8), insbesondere eines Drucks, zur Verwendung in einer elektrohydraulischen Steuerung eines automatischen Getriebes, mit einem Regelteil (6), das einem Steuerteil (7) zugeordnet ist, das die variable Größe (8) erzeugt, wobei die variable Größe (8) von einem Fühler (3) verarbeitet wird zur Erzielung einer Meßgröße (2), mit einem Vergleicher, um die Meßgröße (2) mit einem Sollwert (1) zu vergleichen und dessen Ausgang (Fehler $\varepsilon$) von einem PID-Regler (5) verarbeitet wird, dessen Ausgangssignal (9) auf das Regelteil einwirkt, dadurch gekennzeichnet, daß die Regelungseinrichtung außerdem aufweist:
  – eine sich selbst anpassende Korrekturtabelle (10), die den Sollwert (1) empfängt und einen Korrekturwert entsprechend dem Sollwert liefert,
  – einen ersten Addierer, der den Korrekturwert und das Ausgangssignal (9) des Reglers empfängt und ein Ausgangssignal (11) liefert,
  – einen zweiten Addierer, der das Ausgangssignal des ersten Addierers und den Sollwert empfängt und ein Steuersignal (12) für das Regelteil (6) an einen Wandler (13) liefert,
wobei das Laden der Tabelle (10) kontinuierlich während der stabilisierten Betriebsphasen der variablen Größe (8) mit einem Korrekturwert erfolgt, dergestalt, daß die variable Größe (8) dem Sollwert (1) in einer derartigen Weise entspricht, daß die Einrichtung in einer Weise funktioniert vergleichbar einer geschlossenen Schleife und einer offenen Schleife nach einer Periode der Selbstjustierung.

2. Einrichtung nach Anspruch 1, dadurch gekennzeichnet, daß sie einen Detektor (25) aufweist, der zwischen die Addierer geschaltet ist, um das Ausgangssignal des ersten Addierers dergestalt zu überwachen, daß Anomalien der Betriebsweise festgestellt werden.

## Claims

1. A device for regulating a variable parameter (8), in particular a pressure used in electrohydraulic actuation of an automatic gearbox, comprising a regulating element (6) associated with an actuating element (7) rich generates the variable parameter (8), said variable parameter (8) being processed by a sensor (3) to give a measuring parameter (2), a comparator for comparing said measuring parameter (2) to a reference parameter (1) and of which the output (error $\varepsilon$) is processed by a regulator (5) of proportional, integral and differential type having an output signal (9) which acts on the regulating element (6), characterised in that said regulating device is further provided with:
  – an auto-adaptive correction table (10) receiving said reference parameter (1) and delivering a correction value corresponding to said reference parameter,
  – a first adding means receiving said correction value and the output signal (9) of said regulator and supplying an output signal (11), and
  – a second adding means receiving the output signal of the fisrt adding means and the reference parameter and delivering an actuating signal (12) to a converter (13) for the regulating element (6), loading of said table (10) being effected continuously during the stabilised phases of operation of the variable parameter (8) with a value of the correction which had to be made for the variable parameter (8) to correspond to the reference parameter (1) in such a way that the device has a comparable mode of operation in a closed loop and an open loop mode after a period of self-learning.

2. A device according to claim 1 characterised in that it comprises a detector (25) connected between said adding means for monitoring the output signal of said first adding means so as to detect operational anomalies.

EP 0 296 958 B1

## FIG.1

## FIG.2

FIG.3

EP 0 296 958 B1